(19) Europäisches Patentamt
European Patent Office
Office européen des brevets

(11) EP 0 558 356 B1

(12) **EUROPEAN PATENT SPECIFICATION**

(45) Date of publication and mention
of the grant of the patent:
**30.07.1997 Bulletin 1997/31**

(51) Int. Cl.$^6$: **A01G 13/04**

(21) Application number: **93301556.2**

(22) Date of filing: **01.03.1993**

(54) **Improvements in tree shelters**

Verbesserungen für Baumschutze

Perfectionnements dans les abris pour arbres

(84) Designated Contracting States:
**ES FR GB**

(30) Priority: **28.02.1992 GB 9204295**

(43) Date of publication of application:
**01.09.1993 Bulletin 1993/35**

(73) Proprietor: **TUBEX LIMITED**
**Send Woking Surrey GU23 7HB (GB)**

(72) Inventors:
• **Dupraz, Christian**
**F-34060 Montpellier Cedex 1 (FR)**

• **Bergez, Jaques-Eric**
**F-60600 La Ferte Mace (FR)**

(74) Representative: **Dixon, Donald Cossar et al**
**Gee & Co.**
**Chancery House**
**Chancery Lane**
**London WC2A 1QU (GB)**

(56) References cited:
**DE-U- 7 832 685** **FR-A- 2 621 441**

Printed by Rank Xerox (UK) Business Services
2.14.11/3.4

## Description

This invention relates to tree shelters of the type comprising a tube of transparent or translucent plastics material which is secured in position around a young tree. Such shelters have become increasingly popular in recent years, both to provide physical protection for the young tree against damage by, for example, animals and wind, and to provide a beneficial micro-climate which promotes tree growth.

While conventional shelters have proved generally successful in assisting the development of young trees, a problem arises in meeting the requirements of the young tree for photosynthesis. These requirements are considerable: for example a young tree having a leaf area of about 500cm$^2$ would have a leaf carbon dioxide demand of 10mg $CO_2.dm^{-2}.h^{-1}$, and a tree with a leaf area of about 3000cm$^2$ a demand of about 16mg $CO_2.dm^{-2}.h^{-1}$. These demands are not met by the static conditions obtaining within a conventional shelter. Moreover, the temperature within the shelter may rise, leading to high rates of respiration.

To try to overcome such problems, and in particular the more readily apparent overheating problem, the fairly obvious expedient which has been adopted is to increase ventilation by forming holes in the upper portion of the tube. Holes of this type are disclosed in, for example, French Patent Specification No. 2 621 441 (Girard et al) in which aeration holes are disclosed in the upper part of a shelter for young vines. There is further known, see DE-U-7,832,685, a shelter according to the preamble of Claim 1.

While the supply of $CO_2$ is increased, the effect of such holes is to tend to dissipate the microclimate created and, unless the ambient air is moist, the flow of hot dry air over the leaves will cause water stress in the young tree.

It is an aim of the present invention to provide a tree shelter in which the above drawbacks of prior art shelters are alleviated or eliminated. This object is achieved by the features of the characterizing clause of Claim 1.

According to the present invention there is provided a tree shelter comprising at or near one end thereof air inlet means arranged such that in use in sunny conditions there is induced an upward flow of air through the tube that will meet the carbon dioxide demand of a tree enclosed within the shelter. Moreover, water transpired by the lower leaves increases the humidity of the air flowing past the upper leaves, limiting their transpiration and thus improving the gross water use of the tree. ("Sunny conditions" may be taken as full sunlight at any latitude and between 10.00 and 14.00 hours local solar time.) Generally the rate of flow of air up the shelter will be from two to twenty litres per minute.

The upward flow of air through the shelter is of course a "chimney effect" created by the pressure difference between the ambient air and the air inside the shelter, which is warmed by the radiation capture effect (r) of solar radiation passing through the wall(s) of the shelter.

The rate of air flow through a cylindrical shelter having a hole of diameter d near its lower end is given by the formula

$$d = 0.176D^{½}H^{-½}r^{-¼}$$

where D is the internal diameter of the shelter, H the height from the centre of the hole to the top of the shelter, and r is the radiation capture coefficient of the shelter.

While the inventors currently believe that the optimum value of d is given by the above formula, it is envisaged that a value of d of from 0.8 to 1.25 times the optimum value will give a beneficial effect, and take into account the indeterminate factor of the baffle effect of the tree leaves contained within the shelter and which will slow the rate of flow. If the hole is too large the chimney effect is impaired as air will flow through it in both directions. Heat and moisture are thus lost from the bottom of the tube instead of passing up through the leaves. Conversely, if the hole is too small the chimney effect will not be able to provide enough $CO_2$.

Although the above formula relates to a single circular hole, any other suitable aperture arrangement may be adopted as discussed in more detail later; moreover, the air inlet need not even be constituted by an aperture in the shelter wall but realised by raising the bottom of the shelter a suitable distance from the ground, either by securing it to the shelter support in an appropriate position or by providing suitable distancing means between the bottom of the shelter and the soil, eg an apertured collar or integral projections.

Trials suggest that the use of tree shelters according to the invention significantly improves the root and stem diameter growth of trees grown therein, as compared with conventional shelters.

Although the invention may clearly be carried out in a variety of ways some particular embodiments thereof will now be described, by way of example, with reference to the accompanying drawings in which

Figure 1 is a diagrammatic elevation of a tree shelter according to the invention; and,
Figures 2 to 5 are each an elevation on a smaller scale of the lower portion of a variant of the shelter of Fig. 1

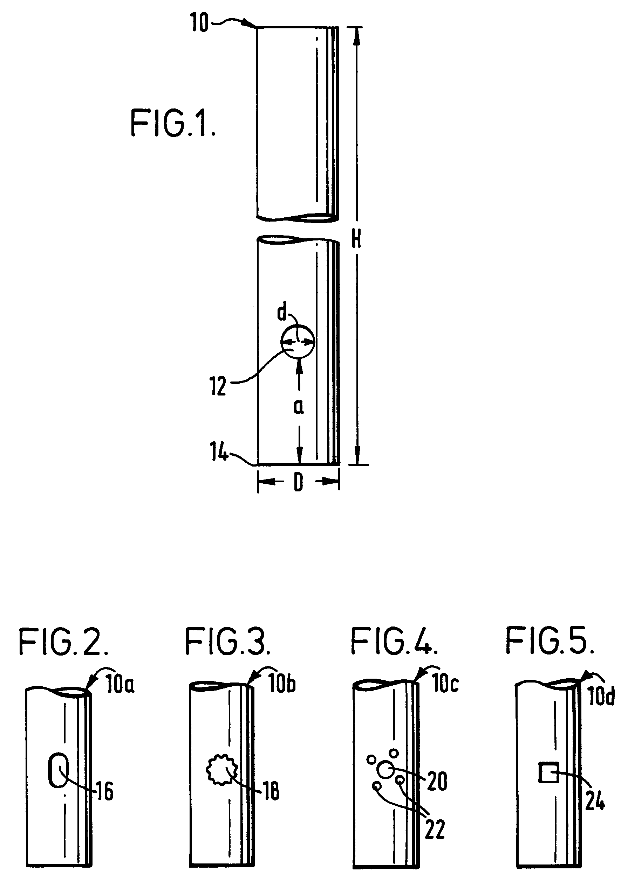

As shown in Fig. 1 a generally cylindrical tree shelter, twin-walled, which has been formed by extrusion of a translucent plastics material, for example poly-carbonate, has a circular hole 12 punched through the wall thereof. The lowest portion of the hole 12 is normally at a height of from 10 to 60 cm above the lower end 14. A height in this range has generally been found to be suitable. The minimum height in any particular application is determined by three main factors, namely the needs to maintain the structural strength of the lower portion of the shelter 10; to deter the entrance of slugs, snails and small predators; and to minimize soil-drying effect.

Set out in Tables I - IV below are suitable hole diameters (d) in millimetres for holes in shelters having diameters of 8, 9, 10 and 11 cm, respectively. The hole diameter (d) is given for shelters of various heights (H) and radiation capture coefficients (r)

### TABLE I

| (D=8cm) | | | |
|---|---|---|---|
| H (m) | r=0.5 | r=0.6 | r=0.7 |
| 0.6 | 110 | 105 | 101 |
| 1.2 | 65 | 62 | 60 |
| 1.8 | 48 | 46 | 44 |
| 2.5 | 38 | 36 | 35 |

### TABLE II

| (D=9cm) | | | |
|---|---|---|---|
| H(m) | r=0.5 | r=0.8 | r=0.7 |
| 0.6 | 116 | 111 | 107 |
| 1.2 | 69 | 66 | 64 |
| 1.8 | 51 | 49 | 47 |
| 2.5 | 40 | 38 | 37 |

### TABLE III

| (D=10cm) | | | |
|---|---|---|---|
| 11(m) | r=0.5 | r=0.6 | r=0.7 |
| 0.6 | 122 | 117 | 113 |
| 1.2 | 73 | 70 | 67 |
| 1.8 | 54 | 51 | 49 |
| 2.5 | 42 | 40 | 39 |

### TABLE IV

| (D=11cm) | | | |
|---|---|---|---|
| H(m) | r=0.5 | r=0.6 | r=0.7 |
| 0.6 | 128 | 123 | 118 |
| 1.2 | 76 | 73 | 70 |
| 1.8 | 56 | 54 | 52 |
| 2.5 | 44 | 42 | 40 |

It is apparent from the above Tables that the value of H is the most important factor determining the size of hole necessary to give a suitable chimney effect.

Fig. 2 shows a shelter 10a having a hole 16 of oval form; Fig 3 a shelter 10b having a hole 18 with a dentate outline; Fig. 4 a shelter 10c with a circular central hole 20, surrounded by a cluster of smaller, circular holes 22; and Fig. 5 a shelter 10d having a square hole 24. Many other variant forms of aperture may of course be used depending on aesthetic considerations and the material of cross-section of the shelter. Multiple holes of smaller, individual size are advantageous where it is important to exclude rodents and to reduce the tendency of strong winds to impair the chimney effect; on the other hand multiple holes may entail the danger of weakening the shelter wall.

The air flow through a single non-circular or multiple apertures is generally less than through a single circular aperture of equivalent area; this is particularly the case with multiple holes where the interference between air streams issuing through different holes creates turbulence. It is therefore important to take dynamic air flow effects into account when calculating the area of aperture needed to give the required chimney effect.

In carrying out the present invention it is generally best to use seamless tubes as the seams of stapled or folded tubes tend to have gaps, air flow through which interferes with the chimney effect essential to the present invention.

## Claims

1. A tree shelter comprising a generally tubular body (10,10a-d), formed of transparent or translucent material, in which air inlet means (12,16,18,20,22,24) are provided at or near one end of the body (10,10a-d) such that, in use in sunny conditions, there is induced an upward flow of air through the body (10,10a-d) that will meet the carbon dioxide demand of a tree enclosed within the shelter is characterised in that said air inlet means has an area equivalent to that of a single circular aperture (12) having a diameter of from 0.8d to 1.25d, d being determined by the formula

$$d = 0.176D^{1/2}H^{-1/2}r^{-1/4}$$

where d is the internal diameter of the shelter, H the height from the centre of the hole to the top of the shelter, and r is the radiation capture coefficient of the shelter.

2. A tree shelter as claimed in claim 1, in which the rate of the induced air flow is from 2 to 20 l/min.

3. A tree shelter as claimed in claim 1 or 2, in which the air inlet means comprise one or more apertures (12,16,18,20,22,24) through the wall of the body (10,10a-d).

4. A tree shelter as claimed in claim 1, 2 or 3, in which the one or more apertures are of circular (12), ellipsoidal (16), square (24) or dentate (18) outline.

5. A tree shelter as claimed in claim 3, or 4, in which the nearest edge of an aperture (12,16,18,22,24) is not less than 10 cm and not more than 60 cm from the nearer end (14) of the body (10).

**Patentansprüche**

1. Ein Baumschutz mit einem im allgemeinen rohrförmigen Körper (10, 10a-d) aus durchsichtigem oder lichtdurchlässigem Material, bei dem an einem Ende des Körpers (10, 10a-d) oder in der Nähe davon Lufteinlaßmittel (12, 16, 18, 20, 22, 24) vorgesehen sind, so daß bei Gebrauch des Baumschutzes unter sonnigen Bedingungen ein durch den Körper (10, 10a-d) aufsteigender Luftstrom induziert wird, der dem Kohlendioxidbedarf eines innerhalb des Schutzes eingeschlossenen Baumes entspricht, ist dadurch gekennzeichnet, daß die Fläche des besagten Lufteinlaßmittels ebenso groß ist wie die einer einzigen kreisförmigen Öffnung (12) mit einem Durchmesser von 0,8 d bis 1,25 d, wobei d der Formel

$$d = 0,176D^{1/2}H^{-1/2}r^{-1/4}$$

entspricht und d der Innendurchmesser des Schutzes, H die Höhe von der Mitte des Loches bis zum oberen Rand des Schutzes und r der Strahlungseinfangkoeffizient des Schutzes ist.

2. Ein Baumschutz nach Anspruch 1, bei dem die Geschwindigkeit des induzierten Luftstroms von 2 bis 20 l/min. beträgt.

3. Ein Baumschutz nach Anspruch 1 oder Anspruch 2, bei dem die Lufteinlaßmittel eine oder mehrere durch die Wand des Körpers (10, 10a-d) führende Öffnungen (12, 16, 18, 20, 22, 24) umfassen.

4. Ein Baumschutz nach Anspruch 1, 2 oder 3, bei dem die Form der einen Öffnung bzw. der mehreren Öffnungen kreisförmig (12), ellipsoid (16), quadratisch (24) oder verzahnt (18) ist.

5. Ein Baumschutz nach Anspruch 3 oder Anspruch 4, bei dem der einer Öffnung (12, 16, 18, 22, 24) am nächsten liegende Rand nicht weniger als 10 cm und nicht mehr als 60 cm von dem näher gelegenen Ende (14) des Körpers (10) entfernt ist.

**Revendications**

1. Un abri pour arbre comprenant un corps généralement tubulaire (10, 10 a-d), formé d'un matériau transparent ou translucide, dans lequel des moyens d'entrée d'air (12, 16, 18, 20, 22, 24) sont réalisés à ou près d'une extrémité du corps (10, 10 a-d) de telle façon que, en utilisation dans des conditions d'ensoleillement, on induit un écoulement ascendant d'air à travers le corps (10, 10 a-d) qui couvrira les besoins en dioxyde de carbone de l'arbre enfermé dans l'abri, caractérisé en ce que ces moyens d'entrée d'air ont une section équivalente à celle d'une ouverture circulaire simple (12) ayant un diamètre de 0,8 d à 1,25 d, d étant déterminé par la formule

$$d = 0,176D^{1/2}H^{-1/2}r^{-1/4}$$

dans laquelle d est le diamètre interne de l'abri, H est la hauteur du centre du trou au sommet de l'abri, et r est le coefficient de capture du rayonnement de l'abri.

2. Un abri pour arbre selon la revendication 1, dans lequel le débit de l'écoulement d'air induit est de 2 à 20 l/mn..

3. Un abri pour arbre selon la revendication 1 ou 2, dans lequel les moyens d'entrée d'air comprennent une ou plusieurs ouvertures (12, 16, 18, 20, 22, 24) à travers la paroi du corps (10, 10 a-d).

4. Un abri pour arbre selon la revendication 1, 2 ou 3, dans lequel la ou les ouvertures ont un contour circulaire (12), ellipsoïdal (16), carré (24) ou dentelé (18).

5. Un abri pour arbre selon la revendication 3 ou 4, dans lequel la plus proche bordure d'une ouverture (12, 16, 18, 22, 24) n'est pas à moins de 10 cm et à plus de 60 cm de la plus proche extrémité (14) du corps (10).

FIG.1.

FIG.2.    FIG.3.    FIG.4.    FIG.5.